# EUROPÄISCHE PATENTSCHRIFT

(11) **EP 2 726 749 B1**
(45) Veröffentlichungstag und Bekanntmachung des Hinweises auf die Patenterteilung: **09.09.2015**
(21) Anmeldenummer: 10734476.4
(22) Anmeldetag: 09.07.2010
(51) Int. Cl.: F16C 13/02, F16C 19/38, F16C 19/54

(54) **KOMPAKTE AXIAL-RADIAL-LAGERUNG**
COMPACT AXIAL-RADIAL BEARING
ROULEMENT COMBINÉ RADIAL-AXIAL COMPACT

(30) Priorität: 13.07.2009 DE 102009033141; 12.01.2010 DE 102010000809; 14.01.2010 DE 202010000914 U
(43) Veröffentlichungstag der Anmeldung: 07.05.2014
(73) Patentinhaber: manroland sheetfed GmbH, 63075 Offenbach (DE)
(72) Erfinder: BAYER, Harald, 63110 Rodgau (DE); HÖHN, Hans-Dieter, 65366 Geisenheim (DE); KEMMERER, Klemens, 63110 Rodgau (DE)
(74) Vertreter: Stahl, Dietmar
(86) Internationale Anmeldenummer: PCT/EP2010/059863
(87) Internationale Veröffentlichungsnummer: WO 2011/006840

(56) Entgegenhaltungen:
- EP-A1- 0 518 052
- DE-A1- 2 044 074
- DE-A1- 2 917 425
- DE-A1- 4 227 643

## Beschreibung

Die Erfindung betrifft eine kompakte Radial-Axial-Lagerung nach dem Obergriff des unabhängigen Anspruchs. Die kompakte Radial-Axial-Lagerung basiert auf Wälzkörpern und eignet sich insbesondere als Festlager.

Eine Radial-Axial-Lagerung ist aus EP 1 083 346 A1 bekannt, welche ein Radialkräfte aufnehmendes Zylinderrollenlager mit einem Außenring und einem Innenring und ein Axialkräfte aufnehmendes Zylinderrollenlager mit zwei, als eine Wellenscheibe und als eine Gehäusescheibe ausgebildeten Laufscheiben sowie einen Flansch umfasst. Dabei ist der Flansch als Ansatz ausgebildet und radial nach innen gerichtet am Außenring des Radiallagers angeordnet und trennt das Radiallager vom Axiallager, indem eine Flanschseite eine Laufbahn für die Zylinderrollen des Axiallagers aufweist. Der Flansch bildet damit die dritte Laufscheibenfläche, welche in Verbindung mit der als Gehäusescheibe ausgebildeten Laufscheibe ebenfalls eine Gehäusescheibe bildet. Weiterhin umfasst die Radial-Axial-Lagerung Mittel zur Einstellung der Spielfreiheit des Axiallagers.

Eine weitere Radial-Axial-Lagerung ist aus DE 2044074 A1 bekannt.

Der Erfindung liegt die Aufgabe zu Grunde, eine kompakte Radial-Axial-Lagerung zu schaffen, die einen einfachen Aufbau aufweist.

Gelöst wird die Aufgabe durch die Ausbildungsmerkmale des unabhängigen Anspruches 1. Weiterbildungen ergeben sich aus den abhängigen Ansprüchen.

Ein erster Vorteil der Erfindung besteht darin, dass eine kompakte Radial-Axial-Lagerung geschaffen wurde, welche für hohe Beanspruchungen ausgebildet ist. Die am Axialzylinderrollenlager auftretenden Kräfte werden - bezogen auf die als Stand der Technik genannte Ausführung (EP 1 083 346 A1) - primär auf die Anschlusskonstruktion, beispielsweise ein Seitengestell einer Verarbeitungsmaschine, übertragen. Hierzu nimmt insbesondere eine als Gehäusescheibe ausgebildete Laufscheibe die Kräfte auf und leitet diese an die Anschlusskonstruktion weiter. Ein zweiter Vorteil ist darin begründet, dass die Lagervorspannung des Radialzylinderrollenlagers durch eine Aufmassvorgabe am Durchmesser der Welle sowie eine Aufmassvorgabe am Innendurchmesser des Innenrings und die Lagervorspannung des Axialzylinderrollenlagers durch eine in Achsrichtung der Welle auf das Axialzylinderrollenlager aufbringbare Spannkraft erzielbar ist. Hierzu umfasst das Axialzylinderrollenlager eine Distanzscheibe, welche in ihrer Breite (axiale Ausdehnung) auf ein definiertes Maß gefertigt ist und die Größe der aufbringbaren Spannkraft definiert begrenzt. Mittels dieser Ausbildung der Distanzscheibe und in Verbindung mit der definiert aufbringbaren Spannkraft kann die Spielfreiheit des Axial-Zylinderrollenlagers eingestellt werden. Hierbei kann der Innenring des Radialzylinderrollenlagers gegen wenigstens einen als Anschlag wirkenden Absatz oder sonstigen wellenfesten Anschlag der Welle positioniert sein. Damit kann die Lagervorspannung vom Hersteller oder dem Nutzer voreingestellt werden und zusätzliche Mittel zur Einstellung der Lagervorspannung sind hinfällig.

Als dritter Vorteil kann genannt werden, dass die axiale Abstützung - bezogen auf die als Stand der Technik genannte Ausführung (EP 1 083 346 A1) - keinen Flansch am Außenring benötigt und somit die axialen Kräfte nicht über den Außenring auf eine Gehäusescheibe und von dieser auf die Anschlusskonstruktion übertragen werden müssen.

Vielmehr werden die axialen Kräfte direkt über eine Gehäusescheibe aufgenommen.

Die kompakte Radial-Axial-Lagerung eignet sich für sämtliche zu lagernde Wellen, insbesondere für Zylinder und/oder Trommeln in Verarbeitungsmaschinen, beispielsweise Druckmaschinen oder Lackiermaschinen.

Die Erfindung soll an einem Ausführungsbeispiel näher erläutert werden. Dabei zeigen schematisch:
- Fig. 1: eine kompakte Radial-Axial-Lagerung (Schnitt),
- Fig. 2: eine erste Weiterbildung der Radial-Axial-Lagerung gem. Fig. 1,
- Fig. 3: eine zweite Weiterbildung der Radial-Axial-Lagerung gem. Fig. 1.

Eine kompakte Radial-Axial-Lagerung für eine Welle 26 mit einer Achse 8 umfasst ein Radialkräfte aufnehmendes Radialzylinderrollenlager 1 mit einem Außenring 3 und einem Innenring 4 und ein Axialkräfte aufnehmendes Axialzylinderrollenlager 2 mit einer als Wellenscheibe ausgebildeten ersten Laufscheibe 15, einer als Gehäusescheibe ausgebildeten zweiten Laufscheibe 16 und einer als Wellenscheibe ausgebildeten dritten Laufscheibe 17.

Erfindungsgemäß weist der Außenring 3 an einer Seite einen ringförmigen Einstich 10, 10', 10" auf, welcher eine radiale Flanke 10' und eine axiale Flanke 10" umfasst. Der Einstich 10, 10', 10" ist innen liegend am Außenring 3 angeordnet, d.h. die radiale Flanke 10' ist der Achse 8 zugewandt. In diesem Einstich 10, 10', 10" ist die erste, konzentrisch zur Welle 26 angeordnete Laufscheibe 15 derart angeordnet, dass eine erste Seite dieser Laufscheibe 15 in axialer Richtung der Achse 8 kontaktfrei zu der axialen Flanke 10" und in Umfangsrichtung kontaktfrei zur radialen Flanke 10' des Einstichs 10, 10', 10" angeordnet ist und seitlich in Kontakt unmittelbar an dem benachbarten Innenring 4 anliegt, d.h. abgestützt ist. Dabei bildet eine zweite Seite dieser Laufscheibe 15 eine erste Laufbahn 19 für einen ersten Zylinderrollenkranz 12 und unmittelbar an dieser zweiten Seite ist weiterhin eine ringsförmige, die Welle 26 konzentrisch umschließende Distanzscheibe 11 in Kontakt anliegend angeordnet.

Konzentrisch zur Distanzscheibe 11 ist die zweite Laufscheibe 16 (Gehäusescheibe) angeordnet und bildet mit einer ersten Seite eine zweite Laufbahn 20 für den ersten Zylinderrollenkranz 12 und mit einer zweiten Seite eine dritte Laufbahn 21 für einen zweiten Zylinderrollenkranz 13. Beide Zylinderrollenkränze 12, 13 sind konzentrisch zur Distanzscheibe 11 angeordnet.

Dabei sind die erste Laufscheibe 15 und der erste Zylinderrollenkranz 12 in den Einstich 10, 10', 10" des Außenrings 3 integriert angeordnet und von der radialen Flanke 10' des Einstichs 10, 10', 10" kontaktfrei umgeben.

Zu der zweiten Laufscheibe 16 benachbart ist eine als Wellenscheibe ausgebildete dritte, konzentrisch zur Welle 26 angeordnete Laufscheibe 17 angeordnet. Eine erste Seite dieser dritten Laufscheibe 17 bildet eine vierte Laufbahn 22 für den zweiten Zylinderrollenkranz 13 und unmittelbar an dieser ersten Seite ist die Distanzscheibe 11 anliegend angeordnet. An der frei liegenden, zweiten Seite der dritten Laufscheibe 17 liegt ein Spannmittel 24 an, mittels dessen eine Kraft F in axialer Richtung (Achse 8) permanent aufbringbar ist. Das spannmittel 24 kann an der Welle 26 fest angeordnet sein. In einer weiteren Ausbildung können Spannmittel 24 und Welle 26 ein Teil sein.

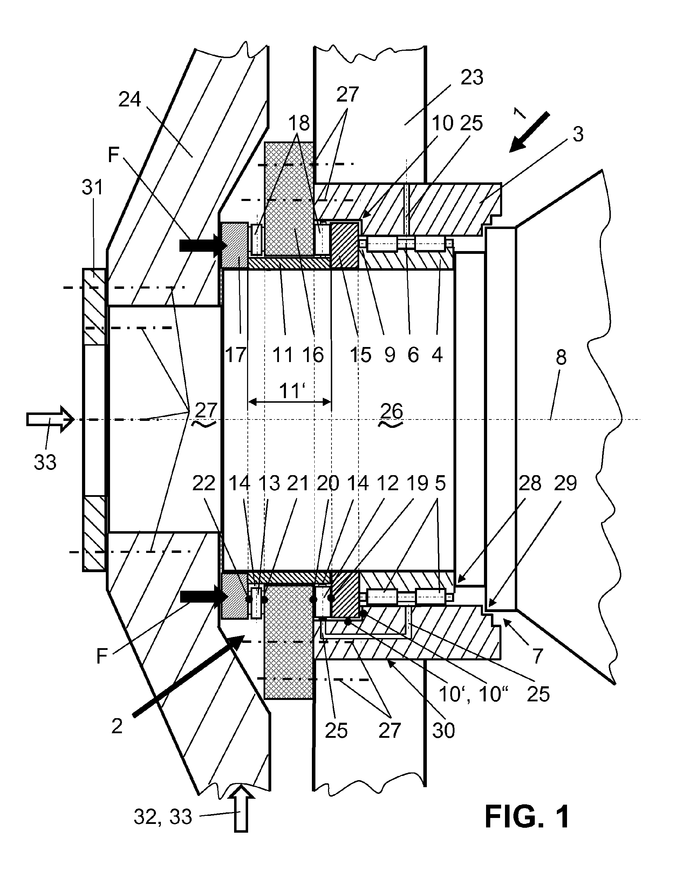

Das in Fig. 1 gezeigte Radialzylinderrollenlager 1 ist zweireihig ausgeführt und umfasst auf Laufbahnen abwälzende Zylinderrollen 5, welche im Käfig 6 geführt sind. Alternativ kann das Radialzylinderrollenlager 1 einreihig oder dreireihig etc. gebildet sein. Das Radialzylinderrollenlager 1 kann nach außen durch Dichtungen 7 geschützt sein, welche zumindest am Außenring 3 oder zwischen Außen- und Innenring 3, 4 angeordnet sind.

Der Innenring 4 kann beispielsweise gemäß Fig. 1 einen nach außen, in Richtung des Einstichs 10, 10', 10" bzw. Außenrings 3 radial gerichteten Bord 9 aufweisen. Alternativ kann der Außenring 3 (nicht gezeigt) einen nach innen, in Richtung des Innenrings 4 radial gerichteten Bord 9 aufweisen.

Im Bereich des Einstichs 10, 10', 10" am Außenring 3 ist die benachbarte Seite des Innenrings 4 radial zur axialen Flanke 10" derart angeordnet, dass die axiale Flanke 10" kontaktfrei zur ersten Laufscheibe 15 des Axialzylinderrollenlagers 2 ist und die Seitenfläche des Innenrings 4 eine gemeinsame Anlagefläche für die erste Laufscheibe 15 des Axialzylinderrollenlagers 2 bilden. Im Einstich 10, 10', 10" ist somit die erste Laufscheibe 15 sowie weiterhin der erste Zylinderrollenkranz 12 kontaktfrei untergebracht. Im weiteren Sinne ist im Bereich des Einstichs 10, 10', 10" zusätzlich der dem Radialzylinderrollenlager 1 benachbarte Teil der Distanzscheibe 11 untergebracht.

Konzentrisch zur Distanzscheibe 11 ist die als Gehäusescheibe ausgebildete zweite Laufscheibe 16 angeordnet, welche mittels Verbindungselementen 27 mit dem Außenring 3 des Radialzylinderrollenlagers 1 lösbar fixiert ist. Im Einbauzustand ist die zweite Laufscheibe 16 wiederum mittels Verbindungselementen 27 an einer Anschlusskonstruktion 23 lösbar fixiert. Die Anschlusskonstruktion 23 kann beispielsweise ein Seitengestell mit einer Bohrung 30 einer Druck- oder Lackiermaschine sein.

Die zweite Laufscheibe 16 trennt die beiden Zylinderrollenkränze 12, 13, deren Zylinderrollen 18 in Käfigen 14 geführt sind.

Die Lagervorspannung in radialer Richtung ist durch eine entsprechende Aufmassvorgabe am Durchmesser der Welle 26 sowie eine Aufmassvorgabe am Innendurchmesser des Innenrings 4 und die Lagervorspannung in axialer Richtung ist durch eine in Achsrichtung der Welle 26 auf das Axialzylinderrollenlager 2 aufbringbare Kraft F erzielbar. Hierzu umfasst das Axialzylinderrollenlager 2 die Distanzscheibe 11, welche in ihrer Breite 11' ein definiertes Maß aufweist. Die Spielfreiheit bzw. Vorspannung zumindest des Axialzylinderrollenlagers 2 ist somit über die axiale Ausdehnung einstellbar. Hierbei wird durch die Breite 11' der Distanzscheibe 11 die Größe der aufbringbaren Kraft F definiert begrenzt, was der maximal möglichen Vorspannung entspricht.

In einer einfachen Ausbildung kann die Kraft F durch ein als Spannmittel 24 ausgebildetes Zahnrad, welches mit Verbindungselementen 27 mit der Welle 26 lösbar verbunden ist, aufgebracht werden. Hierzu liegen die Seitenflächen des Spannmittels 24 bzw. des Zahnrades unmittelbar an der freien Seite der dritten Laufscheibe 17 zwecks Übertragung der Kraft F an. Bevorzugt kann das Spannmittel 24 zusätzlich mittels einer Halterung 31 mittels Verbindungselementen 27 mit der Welle 26 lösbar fixiert sein.

Der Innenring 4 des Radialzylinderrollenlagers 1 kann gegen einen als Anschlag wirkenden ersten und/oder zweiten Absatz 28, 29 der Welle 26 positioniert sein. In Fig. 1 ist gezeigt, dass der Innenring 4 gegen den ersten Absatz 28 der Welle 26 positioniert ist und der Außenring 3 ist zum zweiten Absatz 29 der Welle 26 kontaktfrei positioniert ist.

In einer weiteren Ausbildung können der Innenring 4 und die erste Laufscheibe 15 einstückig aus einem Teil bestehen. In dieser Ausbildung ist die eine Seite der ersten Laufscheibe 15 kontaktfrei zur radialen und axialen Flanke 10', 10" des Einstichs 10 (10', 10") und der mit der Laufscheibe 15 verbundene Innenring 4 liegt unmittelbar am ersten Absatz 28 der Welle 26 an, so dass in axialer Richtung eine definierte Anlage gewährleistet ist. Zumindest der erste Absatz 28 kann alternativ durch einen an der Welle 26 angeordneten Anschlag 35, beispielsweise eine Spieth-Mutter, gebildet sein.

Der Außenring 3 des Radialzylinderrollenlagers 1 weist bevorzugt eine umfangsseitige Zentrierung auf und erzielt dadurch einen guten Sitz in der Bohrung 30 der Anschlusskonstruktion 23. Das Radialzylinderrollenlager 1 ist in der Bohrung 30 der Anschlusskonstruktion 23 angeordnet und weist in radialer Richtung eine Aufmassvorgabe auf.

Das Radialzylinderrollenlager 1 weist Kanäle zur Schmierstoffzuführung 25 auf, welche mit dem Axialzylinderrollenlager 2 verbunden sein können. Alternativ oder in Kombination kann die Schmierstoffversorgung auch über die Freiräume im Bereich des Einstichs 10, 10', 10" sowie den Spalt zwischen der Distanzscheibe 11 und der zweiten Laufscheibe 16 realisiert werden.

Die beispielsweise in der Bohrung 30 bzw. den Bohrungen 30 abgestützte Welle 26 kann ein Zylinder oder eine Trommel einer Druck- und/oder einer Lackiermaschine sein. Bei dieser Ausbildung können der erste Absatz 28 und/oder der zweite Absatz 29 eine Zylinderschulter sein. Auf das als Spannmittel 24 ausgebildete Zahnrad kann ein Antrieb 32 eines Hauptantriebes mit Räderzug und/oder ein separater, eigenmotorischer Antrieb 33 einer Druck- und/oder einer Lackiermaschine einspeisbar sein. Alternativ kann der separate Antrieb 33 unmittelbar an der Welle 26 (bei Wegfall des Zahnrades) angeordnet sein, wobei das Zahnrad in dieser Ausbildung durch ein anderes Spannmittel 24 mit gleicher axialer Kraftwirkung ersetzt ist.

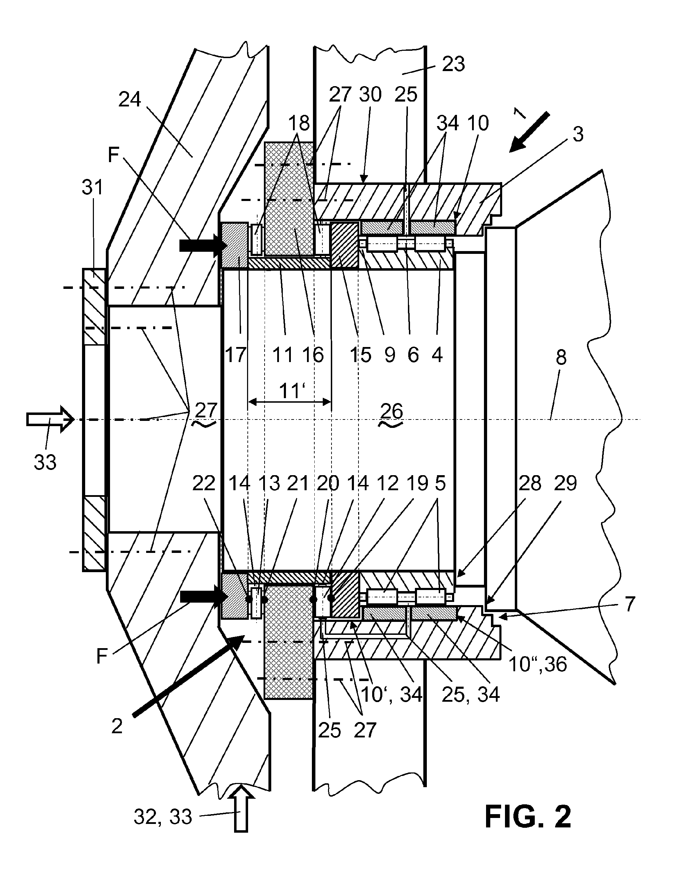

In Fig. 2 ist eine Ausbildung einer kompakte Radial-Axial-Lagerung gezeigt, die im Wesentlichen den gleichen Aufbau wie die Ausbildung gemäß Fig. 1 aufweist. Der Außenring 3 weist innen liegend wenigstens einen Laufring 34 für die abwälzenden Zylinderrollen 5 des Radialzylinderrollenlagers 1 auf. Der Laufring 34 ist aus einem Lagerwerkstoff und mit dem Außenring 3, bei Bedarf lösbar, verbunden. Bei dieser Ausbildung umfasst der Außenring 3 wiederum einen Einstich 10, 10', 10", welcher neben dem ersten Zylinderrollenkranz 12 und der ersten Laufscheibe 15 zusätzlich den wenigstens einen Laufring 34 aufnimmt. Dabei ist der Laufring 34 mit einer ersten Seite in unmittelbaren Kontakt mit der axialen Flanke 10" des Einstichs 10, 10', 10". Die andere, zweite Seite des Laufrings 34 ist kontaktlos der ersten Laufscheibe 15 benachbart zugeordnet.

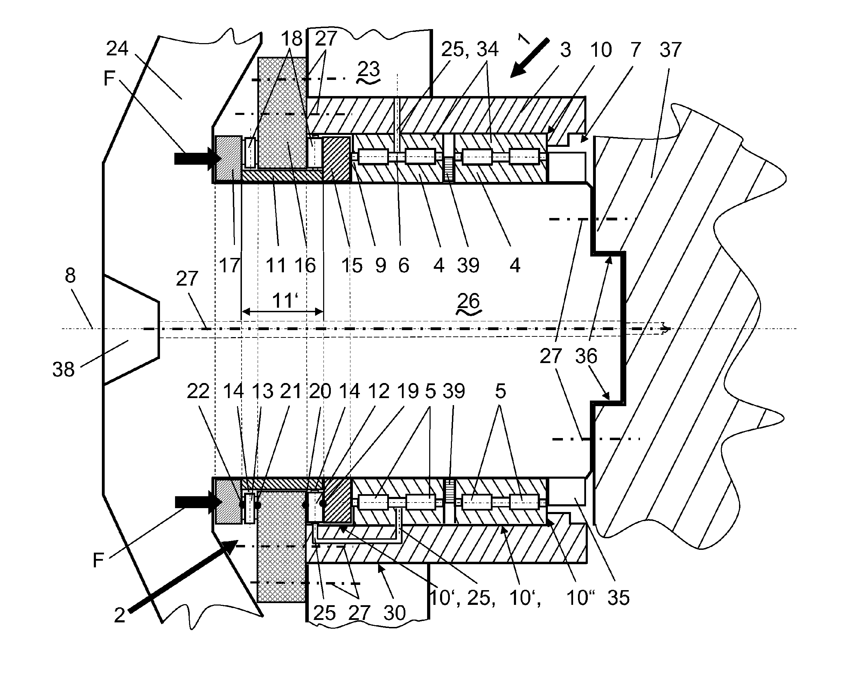

Gemäß Fig. 3 ist eine weitere Ausbildung einer kompakte Radial-Axial-Lagerung gezeigt, die im Wesentlichen den gleichen Aufbau wie die Ausbildung gemäß Fig. 1 bzw. 2 aufweist. Hierbei ist das Radialzylinderrollenlager 1 mehrreihig ausgebildet und kann wiederum vom Außenring 3 aufgenommene Laufringe 34 aufweisen. Der Außenring 3 umfasst wiederum einen Einstich 10, 10', 10", welcher neben dem ersten Zylinderrollenkranz 12 und der ersten Laufscheibe 15 zusätzlich die weiteren Bauteile des mehrreihigen Radialzylinderrollenlagers 1, je nach Ausbildung mit oder ohne wenigstens einen Laufring 34, aufnimmt. Dabei ist der Laufring 34 mit einer ersten Seite in unmittelbaren Kontakt mit der axialen Flanke 10" des Einstichs 10, 10', 10". Die der ersten Laufscheibe 15 zugeordnete Seite eines Laufrings 34 ist kontaktlos benachbart zugeordnet. Zwischen den mehrreihigen Bauteilen des Radialzylinderrollenlagers 1, speziell zwischen den Innenringen 4 kann konzentrisch zur Welle 26 wenigstens eine Scheibe 39 angeordnet sein.

Im frei liegenden Bereich des Radialzylinderrollenlagers 1 ist in axialer Richtung der Innenring 4 bzw. sind die Innenringe 4 gegen einen an der Welle 26 fixierbaren Anschlag 35 anliegend positioniert. Der Anschlag 35 kann beispielsweise als eine Spieth-Mutter ausgeführt sein.

Weiterhin weist der frei liegende Bereich des Radialzylinderrollenlagers 1 eine Dichtung 7 auf.

In der Ausbildung gemäß Fig. 3 ist gezeigt, dass die Welle 26 mit dem Spannmittel 24 einteilig aus einem Stück bestehen kann. In einer Weiterbildung kann die Welle 26 als Wellenzapfen ausgebildet sein und mit einem Anschlussbauteil 37, beispielsweise einem Zylinder oder einer Trommel einer Verarbeitungsmaschine, lösbar verbunden sein. Hierzu weist die Welle 26 eine stirnseitige Zentrierung 36 auf, welche mit einem passfähigen Gegenstück am Anschlussbauteil 37 korrespondiert. So kann die Welle 26 beispielsweise einen Zapfen als Zentrierung 36 aufweisen, welcher stirnseitig zentriert und lösbar mit dem Anschlussbauteil 37 verbunden ist. Hierzu kann das Gegenstück am Anschlussbauteil 37 eine stirnseitig angeordnete Ausdrehung mit Zentrierflächen umfassen. Alternativ kann das Anschlussbauteil 37 stirnseitig einen Zapfen aufweisen, welcher stirnseitig zentriert in einem Bund der Welle 26 aufgenommen und lösbar verbunden ist. Die Welle 26 kann hierzu mehrere Verbindungselemente 27 aufweisen, welche lösbar mit dem Anschlussbauteil 37 fixierbar sind. In einer Weiterbildung kann das Spannmittel 24 an der freien Seite eine Vertiefung aufweisen, in der wenigstens ein Verbindungselement 27 aufgenommen und mit dem Anschlussbauteil 37 verbindbar ist.

Zusammengefasst umfasst die kompakte Radial-Axial-Lagerung am Außenring 3 des Radialzylinderrollenlagers1 einen Einstich 10, 10', 10" und in diesem Einstich 10, 10', 10" sind die erste Laufscheibe 15 und der erste Zylinderrollenkranz 12 derart angeordnet, dass eine erste Seite der ersten Laufscheibe 15 in axialer Richtung an dem Innenring 4 des Radialzylinderrollenlagers 1 abgestützt ist. Dass eine zweite Seite dieser Laufscheibe 15 eine erste Laufbahn 19 für den ersten Zylinderrollenkranz 12 bildet und unmittelbar an dieser zweiten Seite die Distanzscheibe 11 anliegend angeordnet ist. Konzentrisch zur Distanzscheibe 11 ist die zweite Laufscheibe 16 angeordnet und bildet mit einer ersten Seite eine zweite Laufbahn 20 für den ersten Zylinderrollenkranz 12 und mit einer zweiten Seite eine dritte Laufbahn 21 für einen zweiten Zylinderrollenkranz 13. Zur zweiten Laufscheibe 16 benachbart ist eine als Wellenscheibe ausgebildete dritte Laufscheibe 17 angeordnet. Eine erste Seite dieser Laufscheibe 17 bildet eine vierte Laufbahn 22 für den zweiten Zylinderrollenkranz 13 und unmittelbar an dieser ersten Seite ist die Distanzscheibe 11 anliegend angeordnet. An der zweiten Seite der dritten Laufscheibe 17 liegt das Spannmittel 24 an, mittels dessen eine Kraft F in axialer Richtung der Welle 26 aufbringbar ist.

Die Wirkungsweise ist wie folgt:
Das Spannmittel 24 wird gemäß Fig. 1 und 2 mittels der Verbindungselemente 27 mit der Welle 26 lösbar verbunden. Dabei wirkt eine Kraft F primär auf die dritte Laufscheibe 17 und von dieser auf den zweiten Zylinderrollenkranz 13 und die zweite Laufscheibe 16, die Distanzscheibe 11, die Anschlusskonstruktion 23, den ersten Zylinderrollenkranz 12, die erste Laufscheibe 15 und teilweise auf den bzw. die Innenringe 4 des Radialzylinderrollenlagers 1, so dass auf die kompakte Radial-Axial-Lagerung eine definierte Vorspannung einstellbar ist. Bevorzugt kann dabei ein Innenring 4 gegen einen Absatz 28 oder einen Anschlag 35 positioniert sein.

Gemäß Fig. 3 wird das Spannmittel 24 mit der Welle 26 einstückig ausgebildet und mittels wenigstens einem Verbindungselement 27 mit dem Anschlussbauteil 37 lösbar verbunden, so dass die Kraft F wiederum primär auf die dritte Laufscheibe 17 etc. wirkt und auf die kompakte Radial-Axial-Lagerung eine definierte Vorspannung einstellbar ist.

### Bezugszeichenliste

- 1: - Radialzylinderrollenlager
- 2: - Axialzylinderrollenlager
- 3: - Außenring
- 4: - Innenring
- 5: - Zylinderrolle
- 6: - Käfig
- 7: - Dichtung
- 8: - Achse
- 9: - Bord
- 10: - Einstich
- 10': - radiale Flanke
- 10": - axiale Flanke
- 11: - Distanzscheibe
- 11': - Breite (Distanzscheibe)
- 12: - erster Zylinderrollenkranz
- 13: - zweiter Zylinderrollenkranz
- 14: - Käfig
- 15: - erste Laufscheibe (Wellenscheibe)
- 16: - zweite Laufscheibe (Gehäusescheibe)
- 17: - dritte Laufscheibe (Wellenscheibe)
- 18: - Zylinderrolle
- 19: - erste Laufbahn
- 20: - zweite Laufbahn
- 21: - dritte Laufbahn
- 22: - vierte Laufbahn
- 23: - Anschlusskonstruktion
- 24: - Spannmittel
- 25: - Schmierstoffzuführung
- 26: - Welle
- 27: - Verbindungselement
- 28: - erster Absatz
- 29: - zweiter Absatz
- 30: - Bohrung
- 31: - Halterung
- 32: - Antrieb (Hauptantrieb)
- 33: - separater Antrieb
- 34: - Laufring
- 35: - Anschlag
- 36: - Zentrierung
- 37: - Anschlussbauteil (Zylinder/Trommel)
- 38: - Vertiefung
- 39: - Scheibe
- F: - Kraft

## Patentansprüche

1. Kompakte Radial-Axial-Lagerung mit einem Radialkräfte aufnehmenden Radialzylinderrollenlager (1) mit einem Außenring (3) und einem Innenring (4) und einem Axialkräfte aufnehmenden Axialzylinderrollenlager (2) mit einer als Wellenscheibe ausgebildeten ersten Laufscheibe (15) und einer als Gehäusescheibe ausgebildeten zweiten Laufscheibe (16),
**dadurch gekennzeichnet,**
**dass** der Außenring (3) einen Einstich (10, 10', 10") aufweist und in diesem Einstich (10, 10', 10") die erste Laufscheibe (15) und ein erster Zylinderrollenkranz (12) derart angeordnet sind, dass eine erste Seite der ersten Laufscheibe (15) in axialer Richtung an dem Innenring (4) des Radialzylinderrollenlagers (1) abgestützt ist,
**dass** eine zweite Seite dieser Laufscheibe (15) eine erste Laufbahn (19) für den ersten Zylinderrollenkranz (12) bildet und unmittelbar an dieser zweiten Seite eine Distanzscheibe (11) anliegend angeordnet ist,
**dass** konzentrisch zur Distanzscheibe (11) die zweite Laufscheibe (16) angeordnet ist und mit einer ersten Seite eine zweite Laufbahn (20) für den ersten Zylinderrollenkranz (12) bildet und mit einer zweiten Seite eine dritte Laufbahn (21) für einen zweiten Zylinderrollenkranz (13) bildet,
**dass** zur zweiten Laufscheibe (16) benachbart eine als Wellenscheibe ausgebildete dritte Laufscheibe (17) angeordnet ist,
**dass** eine erste Seite dieser Laufscheibe (17) eine vierte Laufbahn (22) für den zweiten Zylinderrollenkranz (13) bildet und unmittelbar an dieser ersten Seite die Distanzscheibe (11) anliegend angeordnet ist, und
**dass** an der zweiten Seite der dritten Laufscheibe (17) ein Spannmittel (24) anliegt, mittels dessen eine Kraft (F) in axialer Richtung einer Welle (26) aufbringbar ist.

2. Kompakte Radial-Axial-Lagerung nach Anspruch 1,
**dadurch gekennzeichnet,**
**dass** die erste Seite der ersten Laufscheibe (15) in axialer Richtung unmittelbar an dem Innenring (4) des Radialzylinderrollenlagers (1) abgestützt ist.

3. Kompakte Radial-Axial-Lagerung nach Anspruch 1,
**dadurch gekennzeichnet,**
**dass** der Außenring (3) wenigstens einen Laufring (34) für die Zylinderrollen (5) des Radialzylinderrollenlagers (1) umfasst.

4. Kompakte Radial-Axial-Lagerung nach Anspruch 1,
**dadurch gekennzeichnet,**
**dass** der Innenring (4) gegen einen ersten Absatz (28) einer Welle (26) positioniert ist.

5. Kompakte Radial-Axial-Lagerung nach Anspruch 1,
**dadurch gekennzeichnet,**
**dass** der Innenring (4) gegen einen auf einer Welle (26) angeordneten Anschlag (35) positioniert ist.

6. Kompakte Radial-Axial-Lagerung nach Anspruch 1,
**dadurch gekennzeichnet,**
**dass** der Innenring (4) und die erste Laufscheibe (15) ein Teil sind.

7. Kompakte Radial-Axial-Lagerung nach Anspruch 1,
**dadurch gekennzeichnet,**
**dass** die Distanzscheibe (11) in axialer Richtung eine Breite (11') aufweist und die Vorspannung des Axialzylinderrollenlagers (2) über die axiale Ausdehnung der Distanzscheibe (11) einstellbar ist.

8. Kompakte Radial-Axial-Lagerung nach Anspruch 1,
**dadurch gekennzeichnet,**
**dass** das Spannmittel (24) an der Welle (26) angeordnet ist.

9. Kompakte Radial-Axial-Lagerung nach Anspruch 1,
**dadurch gekennzeichnet,**
**dass** Spannmittel (24) und Welle (26) ein Teil sind.

10. Kompakte Radial-Axial-Lagerung nach wenigstens Anspruch 1 und 8,
**dadurch gekennzeichnet,**
**dass** das Spannmittel (24) ein Zahnrad ist, welches mittels Verbindungselementen (27) lösbar an der Welle (26) befestigt ist.

11. Kompakte Radial-Axial-Lagerung nach Anspruch 1,
**dadurch gekennzeichnet,**
**dass** die Welle (26) ein Zylinder oder eine Trommel einer Druck- und/oder einer Lackiermaschine ist.

12. Kompakte Radial-Axial-Lagerung nach wenigstens Anspruch 1,
**dadurch gekennzeichnet,**
**dass** die Welle (26) eine stirnseitige Zentrierung (36) aufweist und mit einem Anschlussbauteil (37) lösbar verbunden ist.

13. Kompakte Radial-Axial-Lagerung nach wenigstens Anspruch 1 und 8 oder 9,
**dadurch gekennzeichnet,**
**dass** auf das als Spannmittel (24) ausgebildete Zahnrad ein Antrieb (32) eines Hauptantriebes mit Räderzug und/oder ein separater, eigenmotorischer Antrieb (33) einer Druck- und/oder einer Lackiermaschine einspeisbar ist.

## Claims

1. A compact radial-axial mounting with a radial cylindrical roller bearing (1) absorbing radial forces with an outer ring (3) and an inner ring (4) and an axial cylindrical roller bearing (2) absorbing axial forces with a first running disc (15) designed as wavy disc and a second running disc (16) designed as housing disc,
**characterized**
**in that** the outer ring (3) comprises a recess (10, 10', 10") and in this recess (10, 10', 10") the first running disc (15) and a first cylindrical roller rim (12) are arranged in such a manner that a first side of the first running disc (15) in axial direction is supported on the inner ring (4) of the radial cylindrical roller bearing (1),
**in that** a second side of this running disc (15) forms a first raceway (19) for the first cylindrical roller rim (12) and a shim (11) directly contacting this second side is arranged,
**in that** concentrically to the shim (11) the second running disc (16) is arranged and with a first side forms a second raceway (20) for the first cylindrical roller rim (12) and with a second side forms a third raceway (21) for a second cylindrical roller rim (13),
**in that** adjacent to the second running disc (16) a third running disc (17) designed as wavy disc is arranged
**in that** a first side of this running disc (17) forms a fourth raceway (22) for the second cylindrical roller rim (13) and the shim (11) directly contacting this first side is arranged, and
**in that** a clamping means (24) contacts the second side of the third running disc (17), by means of which a force (F) can be applied in axial direction of a shaft (26).

2. The compact radial-axial mounting according to Claim 1, **characterized in that** the first side of the first running disc (15) in axial direction is directly supported on the inner ring (4) of the radial cylindrical roller bearing (1).

3. The compact radial-axial mounting according to Claim 1, **characterized in that** the outer ring (3) comprises at least one race (34) for the cylindrical rollers (5) of the radial cylindrical roller bearing (1).

4. The compact radial-axial mounting according to Claim 1, **characterized in that** the inner ring (4) is positioned against a first shoulder (28) of a shaft (26).

5. The compact radial-axial mounting according to Claim 1, **characterized in that** the inner ring (4) is positioned against a stop (35) arranged on a shaft (26).

6. The compact radial-axial mounting according to Claim 1, **characterized in that** the inner ring (4) and the first running disc (15) are one part.

7. The compact radial-axial mounting according to Claim 1, **characterized in that** the shim (11) in axial direction has a width (11') and the preload of the axial cylindrical roller bearing (2) is adjustable via the axial extent of the shim (11).

8. The compact radial-axial mounting according Claim 1, **characterized in that** the clamping means (24) is arranged on the shaft (26).

9. The compact radial-axial mounting according to Claim 1, **characterized in that** clamping means (24) and shaft (26) are one part.

10. The compact radial-axial mounting according to at least Claim 1 and 8, **characterized in that** the clamping means (24) is a gear wheel which is detachably fastened on the shaft (26) by means of connecting elements (27).

11. The compact radial-axial mounting according to Claim 1, **characterized in that** the shaft (26) is a cylinder or a drum of a printing and/or a coating machine.

12. The compact radial-axial mounting according to at least Claim 1, **characterized in that** the shaft (26) comprises a face-end centring (36) and is detachably connected to a connecting component (37).

13. The compact radial-axial mounting according to at least Claim 1 and 8 or 9, **characterized in that** the gear wheel designed as clamping means (24) can be driven by a drive (32) of a main drive with wheel train and/or a separate drive (33) with separate motor of a printing and/or a coating machine.

## Revendications

1. Palier radial-axial compact, comportant un roulement à rouleaux cylindriques radiaux (1) absorbant les forces radiales et doté d'un anneau extérieur (3) et d'un anneau intérieur (4) et un roulement à rouleaux cylindriques axiaux (2) absorbant les forces axiales et doté d'un premier disque de roulement (15) réalisé sous forme d'une rondelle-arbre et d'un deuxième disque de roulement (16) réalisé sous forme d'une rondelle-logement,
**caractérisé en ce que**
l'anneau extérieur (3) présente une encoche (10, 10', 10") et que le premier disque de roulement (15) et une première couronne de rouleaux cylindriques (12) sont disposés dans cette encoche (10, 10', 10") de manière à qu'une première face du premier disque de roulement (15) s'appuie dans le sens axial sur l'anneau intérieur (4) du roulement à rouleaux cylindriques radiaux (1),
qu'une seconde face de ce disque de roulement (15) forme une première piste de roulement (19) pour la première couronne de rouleaux cylindriques (12) et qu'une rondelle d'écartement (11) est disposée en contact direct sur cette seconde face,
que le deuxième disque de roulement (16) est disposé concentriquement à la rondelle d'écartement (11) et forme par une première face une deuxième piste de roulement (20) pour la première couronne de rouleaux cylindriques (12) et forme par une seconde face une troisième piste de roulement (21) pour une seconde couronne de rouleaux cylindriques (13),
que, à proximité du deuxième disque de roulement (16), un troisième disque de roulement (17) réalisé sous forme d'une rondelle-arbre est disposé,
qu'une première face de ce disque de roulement (17) forme une quatrième piste de roulement (22) pour la deuxième couronne de rouleaux cylindriques (13) et que la rondelle d'écartement (11) est disposée en contact direct sur cette première face, et
que, sur la seconde face du troisième disque de roulement (17), repose un moyen de serrage (24) au moyen duquel une force (F) peut être appliquée à un arbre (26) dans le sens axial.

2. Palier radial-axial compact selon la revendication 1,
**caractérisé en ce que**
la première face du premier disque de roulement (15) s'appuie dans le sens axial directement sur l'anneau intérieur (4) du roulement à rouleaux cylindriques radiaux (1).

3. Palier radial-axial compact selon la revendication 1,
**caractérisé en ce que**
l'anneau extérieur (3) comporte au moins un anneau de roulement (34) pour les rouleaux cylindriques (5) du roulement à rouleaux cylindriques radiaux (1).

4. Palier radial-axial compact selon la revendication 1,
**caractérisé en ce que**
l'anneau intérieur (4) est positionné contre un premier talon (28) d'un arbre (26).

5. Palier radial-axial compact selon la revendication 1,
**caractérisé en ce que**
l'anneau intérieur (4) est positionné contre une butée (35) disposée sur un arbre (26).

6. Palier radial-axial compact selon la revendication 1,
**caractérisé en ce que**
l'anneau intérieur (4) et le premier disque de roulement (15) sont une seule unité.

7. Palier radial-axial compact selon la revendication 1,
**caractérisé en ce que**
la rondelle d'écartement (11) a dans le sens axial une largeur (11') et que la précontrainte du roulement à rouleaux cylindriques axiaux (2) est réglable par l'intermédiaire de l'extension axiale de la rondelle d'écartement (11).

8. Palier radial-axial compact selon la revendication 1,
**caractérisé en ce que**
le moyen de serrage (24) est disposé au niveau de l'arbre (26).

9. Palier radial-axial compact selon la revendication 1,
**caractérisé en ce que**
le moyen de serrage (24) et l'arbre (26) sont une seule unité.

10. Palier radial-axial compact selon au moins les revendications 1 et 8,
**caractérisé en ce que**
le moyen de serrage (24) est une roue crantée qui est fixée de manière amovible sur l'arbre (26) au moyen d'éléments de connexion (27).

11. Palier radial-axial compact selon la revendication 1,
**caractérisé en ce que**
l'arbre (26) est un cylindre ou un tambour d'une machine d'impression et/ou de vernissage.

12. Palier radial-axial compact selon au moins la revendication 1,
**caractérisé en ce que**
l'arbre (26) présente un centrage côté frontal (36) et est connecté de manière amovible à une pièce de raccordement (37).

13. Palier radial-axial compact selon les revendications et 8 ou 9,
**caractérisé en ce que**,
sur la roue crantée faisant office de moyen de serrage (24), un organe de commande (32) d'une commande principale à train de roues et/ou un organe de commande séparé et automoteur (33) d'une machine d'impression et/ou de vernissage peut être mis en place.
